# EUROPÄISCHE PATENTSCHRIFT

(11) **EP 0 676 124 B1**
(45) Veröffentlichungstag und Bekanntmachung des Hinweises auf die Patenterteilung: **26.05.1999**
(21) Anmeldenummer: 95104606.9
(22) Anmeldetag: 29.03.1995
(51) Int. Cl.: A01C 5/06, A01B 29/04

(54) **Stern- oder Packersternwalze für Einzelkornsägeräte und für Bodenwalzen**
Toothed packer roller for precision drills and ground rollers
Rouleau de compactage à disques dentés pour semoir de précision et rouleau

(30) Priorität: 05.04.1994 DE 4411670
(43) Veröffentlichungstag der Anmeldung: 11.10.1995
(73) Patentinhaber: Güttler, Fritz, D-73235 Weilheim (DE)
(72) Erfinder: Güttler, Fritz, D-73235 Weilheim (DE)
(74) Vertreter: Wilhelm & Dauster Patentanwälte European Patent Attorneys

(56) Entgegenhaltungen:
- WO-A-93/17545
- DE-C- 2 747 535
- DE-C- 4 222 141
- US-A- 3 181 622

## Beschreibung

Die Erfindung betrifft eine Stern- oder Packersternwalze nach dem Oberbegriff des Patentanspruchs 1 und geht aus von bekannten Walzen (DE 42 22 141 C2 bzw. DE 27 47 535 C2), wie sie an Einzelkornsägeräten montiert und von Herstellern zur Aussaat von Samenkörnern für Zuckerrüben, Mais, Bohnen, Raps und dergleichen sowie in Bodenwalzen verschiedener Verwendungszwecke in der Landwirtschaft, im Garten- und Landschaftsbau usw. angeboten und geliefert werden.

Es sind Druckrollen an Einzelkornsägeräten bekannt, die die in den Boden abgelegten Samenkörner an den wasserführenden Saathorizont andrücken und die pendelnd und mit Federdruck vom Sägerät beaufschlagt oder die starr montiert, aber tiefenverstellbar, die Sätiefe regeln.

Es sind auch noch andere Anordnungen bekannt, aber alle verwenden Druckrollen, die mindestens teilweise aus Metall, z.B. Nabe und Felge aus Metall und die Umkreislauffläche aus Gummi oder Kunststoff, oder auch vollständig aus Metall, z.B. als Blechprägeteil, gefertigt sind.

Die Umkreislaufflächen sind in axialer Richtung zum Teil zylindrisch, zum Teil auch konkav oder konvex geformt. Aufgelegte Gummi- oder Kunststoffringe haben manchmal Reifenform oder sind Schlappgummiauflagen oder ähnliches. (z.B. DE-Z "dlz", 3/90 S.76-78; Amazonen-Werke-Prospekt "Streifenpacker-Drill-Kombination, Druckvermerk D612* 10.89; DE 39 02 757 A1). Breite Blechlaufkränze sind mitunter an ihren Außenrändern gezackt.

Das Andrückvermögen bekannter Druckrollen an den Sägeräten reicht in der Regel zwar aus, aber ihre Nachteile mit unterschiedlicher Auswirkung bestehen vornehmlich in folgenden wesentlichen Punkten:
Zum einen hinterlassen die meisten eine glatt-gebügelte Spuroberfläche mit mehlartig zerdrückten Feinkrümeln, die bei Niederschlägen breiartig zerfließen und die in den Unterboden führenden Kapillaren sofort verstopfen, so daß zum einen das Niederschlagswasser nicht nach unten versickern kann, sondern als Oberflächenwasser talwärts abfließt und Düngemittel und Boden mitreißt, und zum anderen, daß beim Abtrocknen Bodenverkrustungen über und neben den Saatreihen entstehen, so daß die Keimlinge nicht aus dem Boden kommen und unter der Kruste verkümmern, sofern nicht zum richtigen Zeitpunkt ein, zusätzlich Kosten verursachendes, mechanisches Krustenbrechen erfolgt, wobei auch ein gewisser Anteil von Keimlingen zerstört wird, was bei den heute in aller Regel auf Endabstand gesäten Beständen den Ertrag mindert und nicht hinnehmbar ist. Nicht versickerndes Regenwasser sammelt sich an der Oberfläche und kann bereits in gering geneigten Lagen starke Bodenerosionen verursachen.

Zum anderen drücken Druckrollen mit schmal geformter Laufkranzfläche tief angelegte Andrückspuren neben den Saatreihen in den Boden, welche noch zusätzlich zu den vorgenannten Nachteilen als Wassersammelrinnen wirken und das Regenwasser zur tiefsten Ackerstelle leiten, wobei häufig an den Saatreihen neben Boden- sogar Samenabtragungen erfolgen können, so daß an der Saat nichts zu retten ist. Umbruch und Neuansaat mit hohen Kosten, dazu Ertragsminderung wegen verlorener Vegetationszeit sind das Ergebnis.

In nassen Frühjahren kann oft nicht abgewartet werden, bis optimale Bodenbedingungen vorliegen. Insbesondere größere Betriebe, die im Zuge des rasanten Strukturwandels zunehmen und die zu einer maximalen Maschinen- und Zeitausnutzung gezwungen sind, können in vielen Fällen nicht auf optimale Bedingungen warten. Bei feuchten Löß-, Lehm- und Tonböden kann es deshalb bei Druckrollen mit Walkgummireifen, die sich zwar besser von anhaftender Erde reinigen als Metalldruckrollen, zu folgenden Problemen kommen:
Schmale Walkgummireifen sinken u.U. noch tiefer in den Boden ein als metallene und können, wie diese übrigens auch, zusammen mit anklebendem feuchten Boden das Saatgut wieder aus dem Boden holen. Verstärkt werden kann diese Erscheinung noch durch das Schöpfen des tiefer eingesunkenen Laufkranzkragens. Breite Walkgummireifen sinken zwar weniger tief in den Oberboden ein und schöpfen somit auch weniger Saatgut aus dem Boden, wenn Feuchterde an den Druckrollen hängenbleibt, aber auf dem Übergangskranz vom Walkgummi zur Felge kann sich kranzartig Boden soweit aufbauen, daß die Druckrollen blockieren.

Die weiter bekanntgewordenen Fingerdruckrollen vermeiden zwar die schädlichen Bodenverschlämmungen und Erosionen weitestgehend, weil die Gummifinger ihren Bodeneinstich wieder auflockern, kommen aber in vielen Böden, insbesondere in wechselnden Böden unter dem sie belastenden Geräte- oder Federdruck zu tief in Bodeneinstich, so daß sie den voraus korrekt abgelegten Samen, z.B. für Zuckerrüben, teilweise im Abstand zueinander verschieben, teilweise zusammen mit Bodenkrümeln flachgründiger verlagern und teilweise gänzlich an die Oberfläche holen, zumal es für den Anwender gänzlich unzumutbar ist und auch nicht praktikabel wäre, sollte er in wechselhaften Böden eines Feldes die Einstellung der Druckrollen laufend verändern müssen.

Bei den Walkgummirollen ist noch eine Sonderform einer Fingerdruckrolle bekanntgeworden, die auf dem Umkreis ihres Walkgummireifens einen Kranz kleiner Gummifinger bzw.- nocken aufweist. Diese krümeln zwar die schmal und auch vertieft angelegte Druckspur etwas an, doch sammelt sich darin ebenso Niederschlagswasser mit allen nachteiligen Folgen, wie eingangs bei den schmalen Druckrollen dargestellt.

Es ist nicht damit getan, diese Sonderform in der Lauffläche zu verbreitern und mit mehreren nebeneinander angeordneten Nockenkranz-Reihen auszustatten, denn zwischen den nahestehenden Nachbarnocken bestände erhöhte Gefahr von Bodenanklebungen.

Der Erfindung liegt die Aufgabe zugrunde, die gattungsgemäßen Druckwalzen derart weiter auszugestalten, daß sie bei einfacher Bauweise Bodenanklebungen, zumindest weitgehend, verhindern und gute Bodenrückverfestigung und Oberflächenaufkrümelung ergeben.

Diese Aufgabe wird durch die kennzeichnenden Merkmale des Patentanspruches 1 gelöst.

Bei den erfindungsgemäß gestalteten Stern- oder Packersternwalzen aus Kunststoff ist die Druckwalze in ihrer Gesamtheit je nach Materialformulierung je nach den Bedürfnissen mehr oder weniger elastisch einzustellen, d.h. es gibt keinen kritischen Übergang von walkender Lauffläche und starrer Felge, wo sich Boden ankleben könnte. Es hat sich gezeigt, daß - insbesondere bei Verwendung des später noch zitierten Kunststoffs - die so hergestellten Packersternwalzen alle Bedingungen hinsichtlich ihrer Abriebfestigkeit, Bruchsicherheit und Wärmestabilität sowie Wasseraufnahme erfüllen, obwohl man bisher stets davon ausgegangen ist, daß Packersternwalzen der eingangs genannten Art nur aus Metall gefertigt werden können, wenn die im rauhen Landwirtschaftsbetrieb verlangten Bedingungen erfüllt sein sollen.

Zur Behebung der Nachteile der bekannten Druckwalzen an Sägeräten als auch aus acker- und pflanzenbaulicher Sicht ist es von großem Vorteil, wenn an Sägeräten der gattungsgemäßen Bauart und dabei insbesondere hinter Getreidesämaschinen großer Arbeitsbreite erfindungsgemäße Druckwalzen entsprechenden Durchmessers nach Art und Weise der für Bodenwalzen und ähnliche Zwecke geschaffenen inzwischen tausendfach bewährten und von Praxis und Wissenschaft anerkannten und unter der Markenbezeichnung "Prismenwalzen-Sterne" bekannt gewordenen Walzenelemente nach DE 42 22 141 C2 benutzt werden, die bisher den für diesen Verwendungszweck entscheidenden Nachteil ihres hohen Eigengewichts hatten. So hat bereits vor einigen Jahren das Institut für Landtechnik an der Universität Bonn, Prof. Brinkmann, nach praktischen Feldversuchen für an Einzelkornsägeräten getestete Prismensterne aus Grauguß - was seit eh und je allgemeiner Standard bei Walzensternen ist - deren funktionellen sowie pflanzen- und ackerbaulichen Vorzüge festgestellt und in der Fachzeitschrift "Agrarübersicht" veröffentlicht.

Das große Eigengewicht zweier bisheriger Prismensterne von ca. 14 kg, die für je ein Sägerät nötig sind, verhinderte jedoch deren allgemeine Anwendung an Einzelkornsägeräten. Zumal seit etwa von deren Bekanntwerden an zunehmend eine acht- und zwölfreihige Saat, z.B. bei Zuckerrüben, praktiziert wird, dazu oft gleich angekoppelt an Saatbettkombinationen, so daß die am hinteren Ende der sowieso schon weitausladenden Gesamtkombination plazierten Prismensterne die Schwerpunktlage so weit nach hinten verlagern, daß die Gerätestabilität ohne kostentreibende Verstärkung an Sägeräten und vorgekoppelten Saatbettkombinationen nicht mehr ausreicht, andererseits das sowieso schon oft zu hohe Eigengewicht solcher Kombinationen die Hubkräfte der Schlepperhydraulik überfordert.

Hinzu kommt, daß sich bei klebrigen Böden, was gerade typische Rübenböden sind, nicht vermeiden läßt,da sich mitunter Boden in die Zackentäler der Prismensterne einklebt, weil das Prismensterneigengewicht ohne größere Fremdlast nicht ausreicht, den anhaftenden Boden beim Abrollen seitwärts aus dem Zackental hinauszudrücken, zumal die Zackenflächen vom Formsand her eine gewisse Rauhigkeit aufweisen, in die sich Boden verzahnen und sich weiter aufstollen kann, was natürlich die Sätiefe unzulässigerweise verändert, was wiederum bei Zuckerrüben besonders nachteilig ist. Es ist nicht damit getan, dem Landwirt die Empfehlung zu geben, die Sätiefe je nach Bodenaufbau ständig nachzuregulieren, zumal bei wechselnden Bodenverhältnissen die Stärke des Bodenaufbaus auf den Prismensternen sich ständig verändern kann und die Laufkränze der Prismensterne auch ungleich und oft unrund aufbauen können und diesen Bodenaufbau auch sektionsweise wieder abwerfen können. Es mußte also eine andere Lösung gefunden werden.

Seit langem wurde nach einer praktikablen Lösung gesucht, um die Prismensterne auch hier nutzen zu können. Versuche mit Aluminiumguß beispielsweise schlugen fehl, weil das Gewicht dennoch zu groß blieb und weil zum anderen der Abrieb an den Prismenzacken bei den heute geforderten hohen Kampagneleistungen zu groß und nicht praxisgerecht ist. Entsprechende Alulegierungen helfen in dieser Richtung auch nicht weiter, wie einschlägige Untersuchungen ergaben. Sie sind außerdem zu teuer. Dazu kommt noch, daß auch bei Einsatz von Aluminium das oben geschilderte Problem des Bodenaufbaus auf den Laufkränzen nicht gelöst ist.

In Auskleidung der Erfindung wird vorgeschlagen, eine elastische, dabei formstabile und gleichermaßen abriebfeste Kunststoff-Formulierung aus einem Duromer mit Polyurethan PU einzusetzen und daraus eine Druckwalze zweckentsprechender Größe für Sägeräte jedweder Art herzustellen, zur paarweisen Anordnung oder auch zur axialen Aneinanderreihung auf einer oder mehreren gemeinsamen Achswellen, z.B. hinter Getreidesämaschinen, die mit oder ohne Verbund mit Bodenbearbeitungsgeräten eingesetzt werden, und diese Druckwalze nach DE 42 22 141 C2 auszubilden, wobei deren kennzeichnenden Merkmale unverändert übernommen werden sollen, um deren inzwischen von Praxis und Wissenschaft anerkannten Wirkungsweise (unten fest und oben ca. 3 cm krümelig locker) auch bei der sonst of verschlämmungsgefährdeten Einzelkornsaat, insbesondere bei Zuckerrüben, in weitgehend allen Bodenarten und -Zuständen zu gewährleisten. Insbesondere wird die ausgerundete Ausgestaltung der Zackentäler nach DE 42 22 141 C2 vorgeschlagen, was eine Bodeneinklebung von Haus aus stark vermindert. Um eine solche aber vollends zu verhindern, kann man den vorgeschlagenen Kunststoff einsetzen, der wachsartig und wasserabstoßend wirkt. Mit dieser Maßnahme läßt sich mit großer Sicherheit in einem großen Feuchtigkeitsbereich und in allen Bodenarten sicherstellen, daß kein funktionsmindernder Bodenanhang bleibt. Auch ein "Schöpfen" - wie eingangs aufgezeigt - ist zuverlässig vermieden, wenn, wie weiter vorgeschlagen wird, die beiden Stirnseiten der Druckrollen flächenhaft ausgeführt sind. Denkbar wäre auch die Verwendung von Polyamid zur Herstellung. Es ist aber davon auszugehen, daß die Herstellung aus einem Duromer mit PU besser ist.

Ein weiterer und wesentlicher Vorteil ist, wie erfindungsgemäß beabsichtigt, das geringe Eigengewicht. Vorteilhaft ist weiter, daß eine einfache Bohrung als Achs-Nabe bereits genügt, gegenüber teureren Lösungen anderer Materialien. Eine diagonal zur axialen Nabenbohrung gerichtete Feinbohrung mit eingesetztem Schmiernippel und die damit sichergestellte Schmiermöglichkeit von Laufachse und Nabe erhöhen die Lebensdauer, abgesehen davon, daß entsprechend formulierter Kunststoff enorm gute Trockenlaufeigenschaften besitzt. Polyurethan (PU), wird deshalb bevorzugt, weil solche modernen Kunststoffe eine Fülle von Möglichkeiten bieten, die Materialeigenschaften z.B. von duroplastisch (ganz steif) bis gummielastisch (ganz weich) je nach Anforderung wunschgemäß und gleichzeitig abriebfest einzustellen. Außerdem bieten sie den großen Vorteil, eine entsprechende Auswahl im drucklosen Gießverfahren auf einfachen Werkzeugen äußerst preisgünstig herstellen zu können, auch bei komplizierten Konturen. So ist es selbstverständlich leicht möglich, statt der vorzugsweise vorgeschlagenen pultdachförmig und in sich prismenförmig gezackten Laufkranzausformung diese z.B. giebeldach- und gleichzeitig prismenförmig gezackt herzustellen, was beispielsweise für bestimmte Sonderfälle denkbar und zweckmäßig ist.

Eine nach DE 42 22 141 C2 gestaltete erfindungsgemäße Kunststoff-Druckwalze ist leicht und trägt das ihr zugeordnete Gerät ausreichend gut. Gleichzeitig ist ihre Selbstreinigung durch entsprechende Materialformulierung ganz gezielt steuerbar. Ist z.B. aufgrund eines von ihr zu tragenden geringen Gerätegewichts damit zu rechnen, daß der in den Zackentälern anhaftende Boden nicht mehr zuverlässig herausgedrückt werden kann, wird das Material mehr in Richtung gummielastisch eingestellt, so daß sich eine Walkbewegung ergibt, die die Druckrolle von anhaftendem Boden reinigt.

Ist hingegen aufgrund eines von ihr zu tragenden größeren Gerätegewichts die Walkbewegung zu groß, so kann die Elastizität reduziert werden bis zu der nötigen Steifigkeit, bei der dann die reduzierte Walkbewegung in Verbindung mit dem auflastenden Gerätegewicht den Boden aus den ausgerundeten Zackentälern seitlich hinausschiebt, zumal der Talausgang nach DE 42 22 141 C2 an der kleineren Stirnseite um einiges weiter ist als der Taleingang auf der größeren Stirnseite der Druckrolle. Es hat sich gezeigt, daß das vorher erwähnte Duromer aus Polyurethan unter Verwendung von Isocyanat in entsprechender Formulierung die gewünschte Abriebfestigkeit, Bruchsicherheit und Wärmestabilität aufweist, um das gewünschte Arbeitsergebnis auch bei starker Sonneneinstrahlung zu gewährleisten, wo andere Kunststoffe zu weich werden. Dieser Werkstoff weist auch eine sehr geringe Wasseraufnahmefähigkeit auf, so daß auch in nassen Böden gearbeitet werden kann. Die Verschleißfähigkeit ist höher als bei Metallen. Diese Werkstoffe lassen sich auch einfach vergießen. Natürlich wäre die Verwendung einer Nabenbuchse aus Metall oder eine Verstärkung mit Textil -, Glas oder Kohlestoffasern in üblicher Weise denkbar.

Bei herkömmlichen Druckrollen, die aus einer Metallfelge und einem darauf aufgezogenen Walkgummi bestehen, kann es zu Problemen dergestalt kommen, daß der Walkgummi selbst zwar den anhaftenden Boden abwirft, daß sich aber seitlich an der Metallfelge Boden anklebt, was dann zu Verstopfungen führen kann. Dieses tritt vor allem am Übergang zwischen dem Walkgummi und der Metallfelge auf.

Größenmäßig sind keine Grenzen gesetzt. So kann die Druckwalze auch in größeren Dimensionen ausgeführt und mit rundem oder mehreckigem Nabendurchbruch entsprchenden Durchmessers versehen und zu mehreren, in axialem Abstand zueinander, auf einer gemeinsamen Achse aufgereiht sein, zur Verwendung als Trag- und Bodenrückfestigungswalze an einem Bodenbearbeitungsgerät beliebiger Art. Die dabei erzielbare Gewichtsreduzierung einer solchen Walze von beispielsweise drei Metern Arbeitsbreite und mit einem Druckwalzendurchmesser von 45 cm und vierundzwanzig Druckwalzen beträgt gegenüber einer gleichen mit Gußeisendruckwalzen und 470 kg Gesamtgewicht immerhin 270 kg oder 57 Prozent Gewichtsminderung.

Dadurch ergibt sich der große Vorteil, daß für eine mit Kunststoffdruckwalzen der beschriebenen Art bestückte Bodenbearbeitungs-Kombination von 3 Metern Arbeitsbreite mit aufgebauter Sämaschine das Aushebevermögen eines Schleppers von 60 bis 65 kW (85 bis 90 PS) ausreichend ist, wozu sonst ca. 80kW/110PS nötig sind, während aber in der zahlenmäßig überwiegenden Gruppe der mittleren landwirtschaftlichen Betriebe der 60/65kW-Schlepper häufig die obere Leistungsgrenze bildet, der jetzt die pflanzen-, ackerbaulich und wirtschaftlich überaus vorteilhafte, kostensparende und inzwischen von der Praxis als auch von der Wissenschaft anerkannte Arbeitswirkung der Prismenwalzen nach DE 27 47 535 C2 und DE 42 22 141 C2 ermöglicht, in Gußeisenausführung in einer vorgenannten Bodenbearbeitungs-Säkombination bisher hubkraftmäßig aber nicht bewältigen konnte. Auch bleibt durch das erheblich bessere Selbstreinigungsvermögen der Kunststoffdruckrolle gegenüber Gußeisen sehr viel weniger Boden anhaften, was den Hubkraftbedarf weitere reduziert.

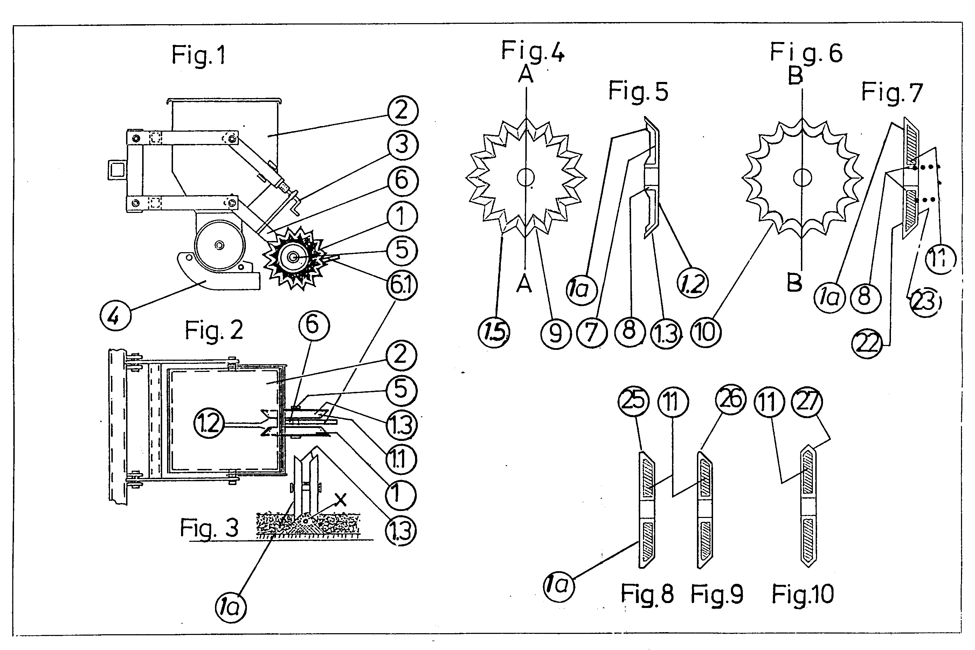

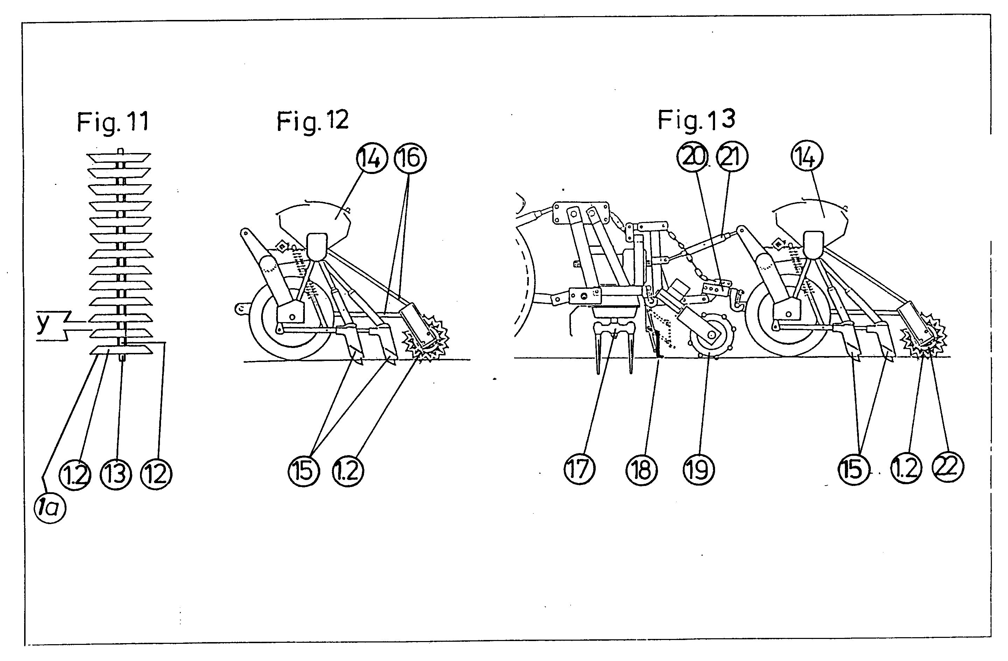

In den Figuren 1 bis 13 sind die erfindungsgemäße Druckrollen dargestellt und im nachfolgenden näher beschrieben.
- Fig. 1: zeigt in Seitenansicht eine erfindungsgemäße Kunststoffdruckrolle (1) angeordnet an ein hinlänglich bekanntes Einzelkornsägerät (2) beliebigen Fabrikats, dessen Bauteile und Funktionen allgemein bekannt sind und deshalb nicht weiter erläutert werden sollen. Die Druckrolle (1) erfüllt zum einen die Aufgabe, das Sägerät (2) zu tragen und dessen Gewicht aufzunehmen und somit die über eine Kurbel (3) einstellbare Bodeneingriffstiefe des Säschares (4) konstant zu steuern. Die andere Hauptaufgabe der Druckrolle (1) besteht darin, den vom Säschar in die Särille eingebettenen Samen an den kapillarwasserführenden Saathorizont anzudrücken und darüber die geöffnete Saatrille zu schließen und mit einem gleichbleibend dünnen, locker aufgekrümelten Bodenschleier abzudecken, wobei die groberen Krümel obenauf sortiert werden als optimaler Verschlämmungschutz.
- Fig. 2: zeigt in Draufsicht die paarweise am Sägerät (2) angeordneten Kunststoffdruckrollen (1, 1.1). Diese sind mit ihrer kleineren Stirnseite (1.2) einander zugewandt und auf einer gemeinsamen Achse (5) gehalten, die quer auf dem Haltearm (6) befestigt ist und dessen verlängertes Ende gleichzeitig den Ausräumer (6.1) zwischen den Druckrollen (1) und (1.1) bildet.
- Fig. 3: zeigt die beiden, mit ihrer kleineren, flächenhaften Stirnseite einander gegenüberstehenden Stern- oder Packersternwalzen (1, 1.1). Im Boden eingebettet ist ein Samenkorn (x) angedeutet, das von den beiden pultdachförmig gestalteten Laufkranz-Umkreisflächen (1.3) von rechts und links an den wasserführenden Saathorizont angedrückt ist. Das den Samen abdeckende Bodenband wird von den beiden pultdachförmig und gleichzeitig gezackt ausgeführten Walzen-Laufkränzen angedrückt und oberflächennah wieder aufgekrümelt, wobei die größeren Bodenkrümel obenauf sortiert werden, wo sie den denkbar besten Verschlämmungsschutz darstellen. Infolge der pultdachförmig gestalteten Laufkranzumkreisflächen ergibt sich auch ein Fertigungsvorteil dergestalt, daß die gemeinsame Walzenachse (5) nicht in einem zusätzlichen Arbeitsgang bearbeitet bzw. abgewinkelt werden und anschließend auch nicht noch in zwei Ebenen winkelgenau eingeschweißt werden muß.
- Fig. 4: zeigt in Aufsicht die kleinere, flächenhaften Stirnseite mit winklig ausgebildeten Zackentälern (9) nach DE 27 47 535 C2,
- Fig. 5: zeigt die Stern- oder Packersternwalze nach Fig. 4 im Profilquerschnitt von A-A. Diese Walze ist - sieht man von der Rippenverstärkung (7) und der Laufnabenwandung (8) ab - in Schüsselform ausgebildet, was den Fertigungsvorteil bietet, daß die Gußform ohne Kerneinlage ausgebildet und somit besonders preisgünstig ist, ebenso wie der Gießvorgang,
- Fig. 6: zeigt in Aufsicht die flächenhaft geschlossene, kleinere Stirnseite der Walze mit ausgerundeten Zakkentälern (10) nach DE 42 22 141 C2,
- Fig. 7: zeigt die Walze nach Fig. 6 im pultdachförmigen Profilquerschnitt von B-B in Sandwichbauweise mit Kerneinlage (11). Diese Kerneinlage (11) ist vorzugsweise aus einem Füllmaterial geringerer Dichte und niedrigerem spezifischen Gewicht als das allseits sie umschließende Material und die flächenhaft geschlossene größere und kleinere Stirnwand (22, 23) der Walze nach Fig. 6,
- Fig. 8: zeigt die Walze nach Fig. 6 und 7 in Aufsicht im Profilquerschnitt B-B und in Sandwichbauweise mit Kerneinlage (11) jedoch mit rechtwinklig gebrochenem Zackenspitzenstumpf (25),
- Fig. 9: zeigt die gleiche Walze wie Fig. 6 bi 8, jedoch mit gerundeten Zackenspitzen (26),
- Fig. 10: zeigt eine Walze nach Fig. 6 im Querschnitt von B-B und in Sandwichbauweise mit Kerneinlage (11), jedoch mit giebeldachförmigem Laufkranz-Profilquerschnitt,
- Fig. 11: zeigt in Draufsicht eine Anzahl von Walzen (1.2), vorzugsweise mit mehreckigem Nabendurchbruch, die mittels Distanzbüchsen (12) mit axialem Abstand (y) auf einer gemeinsamen Achswelle (13) vorzugsweise mehreckigen Querschnitts aufgereiht bzw. gehalten sind,
- Fig. 12: zeigt in Seitenansicht eine übliche Sämaschine (14) hinter deren Säscharen (15) eine Walzenachse mit aufgereihten Walzen nach Fig. 4 bis 10 bzw. 11 mittels an der Sämaschine entsprechend angelenkten Zug- und Tragelementen (16) zweckentsprechender Ausbildung angeordnet sind, und
- Fig. 13: zeigt in Seitenansicht eine Gerätekombination, bestehend aus einer Kreiselegge (17), einem zugeordneten Planierschild (18), einer Trag- und Bodenrückfestigungswalze (19), die auch durch eine Walze nach Fig. 4 bis 10 bzw. 11 ersetzt sein kann, einer mittels Koppelrahmen (20) und Oberlenker (21) angekoppelten Sämaschine (14) und einer hinter den Säscharen entsprechend Fig. 11 nachfolgenden Druckwalze zufolge Fig. 4 bis 9 (10).

Die aufgezeigten und beschriebenen erfindungsgemäßen Druckwalzen aus elastischem Material besitzen neben einer optimalen Wirkungsweise bei der Saatbettgestaltung in Form bestmöglicher Bodenrückfestigung mit gleichzeitiger, ca 3 cm flachen Oberflächenaufkrümelung vor allem die erfindungsgemäß angezielte Leichtgewichtigkeit und das bestmögliche Selbstreinigungsvermögen von anklebendem Boden. Die gestellte Erfindungsaufgabe ist somit voll erfüllt.

## Patentansprüche

1. Stern- oder Packersternwalze zur Festigung landwirtschaftlicher Böden und zur Schollenzertrümmerung, bestehend aus mehreren auf einer gemeinsamen Achse (5, 13) parallel zueinander gelagerten und axial aneinandergehaltenen gezackten Walzenringen (1), deren Zacken (1.5, 1.5') kegelförmig ausgebildet, mit ihren Spitzen auf einem gemeinsamen Umkreisdurchmesser liegen und mit nach einer Seite von einer senkrecht zur gemeinsamen Achse stehenden Ebene (1a) aus pultdachförmig nach außen abfallenden Flanken versehen sind, wobei insbesondere die von den Flanken gebildeten Täler (10) zwischen benachbarten Zacken (1.5, 1.5') zumindest über einen Teil ihrer Länge einen ausgerundeten Talgrund besitzen, dadurch gekennzeichnet, daß die Stern- oder Packersternwalze ganzheitlich aus einem elastischen Kunststoff hergestellt ist.

2. Stern- oder Packersternwalze nach Anspruch 1, dadurch gekennzeichnet, daß mindestens der Zackenlaufkranz bzw. dessen Oberfläche aus einem wasserabstoßenden Material gebildet ist.

3. Stern- oder Packersternwalze nach Anspruch 2, dadurch gekennzeichnet, daß das wasserabstoßende Material aus einem wachsartig wirkenden Kunststoff formuliert ist.

4. Stern- oder Packersternwalze nach einem der Ansprüche 1 bis 3, dadurch gekennzeichnet, daß die beiden Stirnseiten (22,23) der Druckrollen flächenhaft und geschlossen ausgebildet sind.

5. Stern- oder Packersternwalze nach einem der Ansprüche 1 bis 4, dadurch gekennzeichnet, daß das Druckrollenmaterial ein spezifisches Gewicht von weniger als 2 kg/Liter aufweist.

6. Stern- oder Packersternwalze nach einem der Ansprüche 1 bis 3, dadurch gekennzeichnet, daß als Material zur Herstellung ein Duromer, bestehend aus Polyurethan und MDI (Isocyanat) verwendet wird.

7. Stern- oder Packersternwalze nach einem der Ansprüche 1 bis 3, dadurch gekennzeichnet, daß als Material zur Herstellung Polyamid verwendet wird.

8. Stern- oder Packersternwalze nach Anspruch 6 oder 7, dadurch gekennzeichnet, daß die Druckrolle (1, 1.1) im Kunststoffgießverfahren hergestellt ist.

9. Stern- oder Packersternwalze nach Anspruch 1 oder einem der übrigen Ansprüche, dadurch gekennzeichnet, daß eine Nabenbuchse aus einem anderen Material, z.B. aus Metall, vorgesehen ist.

10. Stern- oder Packersternwalze nach Anspruch 1, dadurch gekennzeichnet, daß die Zacken-Spitzen (25, 26) gebrochen oder gerundet sind.

## Claims

1. Toothed packer roller for consolidating agricultural soils and for breaking up clods, consisting of a plurality of toothed roller rings (1) which are mounted parallel to one another and held axially against one another on a common shaft (5, 13), and the teeth (1.5, 1.5') of which are conical, lie with their points on a common circumferential diameter, and are provided with flanks which decline outwards in a monopitch shape on one side from a plane (1a) perpendicular to the common shaft, wherein especially the valleys (10) formed, by the flanks, between adjacent teeth (1.5, 1.5') have at least over part of their length a rounded-out valley bottom, characterized in that the toothed packer roller is produced integrally from a resilient plastics material.

2. Toothed packer roller according to Claim 1, characterized in that at least the tooth running crown or its surface is formed of a water-repellent material.

3. Toothed packer roller according to Claim 2, characterized in that the water-repellent material is formulated from a plastics material having a wax-like effect.

4. Toothed packer roller according to one of Claims 1 to 3, characterized in that the two end faces (22, 23) of the pressure rollers are two-dimensional and closed.

5. Toothed packer roller according to one of Claims 1 to 4, characterized in that the pressure roller material has a specific weight of less than 2 kg/litre.

6. Toothed packer roller according to one of Claims 1 to 3, characterized in that a duromer, consisting of polyurethane and MDI (isocyanate) is used as the material for production.

7. Toothed packer roller according to one of Claims 1 to 3, characterized in that polyamide is used as the material for production.

8. Toothed packer roller according to Claim 6 or 7, characterized in that the pressure roller (1, 1.1) is produced by a plastics casting process.

9. Toothed packer roller according to Claim 1 or one of the remaining claims, characterized in that a hub bush of another material, for example of metal, is provided.

10. Toothed packer roller according to Claim 1, characterized in that the tooth points (25, 26) are broken or rounded.

## Revendications

1. Rouleau de compactage ou rouleau émotteur à étoiles pour compacter les sols agricoles et pour briser les mottes de terre comprenant plusieurs couronnes dentées (1) disposées parallèlement l'une à l'autre sur un axe commun (5, 13) et maintenues l'une contre l'autre dans le sens axial, dont les dents (1.5, 1.5'), qui sont de forme conique, présentent des sommets situés sur un même cercle périphérique et des flancs inclinés vers l'extérieur en forme de toit à un versant vers un côté à partir d'un plan (1a) perpendiculaire à l'axe commun, dans lequel, en particulier, les creux (10) formés par les flancs entre deux dents (1.5, 1.5') voisines sont munis au moins sur une partie de leur longueur d'un fond arrondi, caractérisé en ce que ledit rouleau de compactage ou rouleau émotteur à étoiles est entièrement réalisé dans un matériau synthétique flexible.

2. Rouleau de compactage ou rouleau émotteur à étoiles selon la revendication 1, caractérisé en ce qu'au moins la bande de roulement des dents ou la surface de celle-ci est formée par un matériau hydrophobe.

3. Rouleau de compactage ou rouleau émotteur à étoiles selon la revendication 2, caractérisé en ce que le matériau hydrophobe est réalisé dans une matière synthétique agissant comme une cire.

4. Rouleau de compactage ou rouleau émotteur à étoiles selon l'une quelconque des revendications 1 à 3, caractérisé en ce que les deux faces frontales (22, 23) des rouleaux de compactage forment une surface plane et fermée.

5. Rouleau de compactage ou rouleau émotteur à étoiles selon l'une quelconque des revendications 1 à 4, caractérisé en ce que le matériau des rouleaux de compactage présente un poids spécifique inférieur à 2 kg/litre.

6. Rouleau de compactage ou rouleau émotteur à étoiles selon l'une quelconque des revendications 1 à 3, caractérisé en ce que le matériau utilisé pour la fabrication est une résine thermodurcissable (duromère) composée de polyuréthanne et de diisocyanatodiphenylméthane (isocyanate).

7. Rouleau de compactage ou rouleau émotteur à étoiles selon l'une quelconque des revendications 1 à 3, caractérisé en ce que le matériau utilisé pour la fabrication est un polyamide.

8. Rouleau de compactage ou rouleau émotteur à étoiles selon la revendication 6 ou 7, caractérisé en ce que le rouleau de compactage (1, 1.1) est fabriqué par un procédé de moulage de matière synthétique.

9. Rouleau de compactage ou rouleau émotteur à étoiles selon la revendication 1 ou l'une des autres revendications, caractérisé en ce qu'il est prévu de réaliser une bague de moyeu dans un autre matériau, en métal par exemple.

10. Rouleau de compactage ou rouleau émotteur à étoiles selon la revendication 1, caractérisé en ce que les sommets (25, 26) des dents sont épointés ou arrondis.
